# EUROPEAN PATENT APPLICATION

(11) **EP 2 216 549 A2**
(43) Date of publication of application: **11.08.2010**
(21) Application number: 10152054.2
(22) Date of filing: 29.01.2010
(51) Int. Cl.: F03D 11/00, F03D 7/00

(54) **Wind turbine noise control**

(30) Priority: 10.02.2009 US 368429
(71) Applicant: General Electric Company, Schenectady, NY 12345 (US)
(72) Inventor: Eggleston, Eric, Tehachapi, CA 93561 (US)
(74) Representative: Bedford, Grant Richard

(57) **Abstract**

Disclosed is a wind turbine (10) forming part of a wind turbine system. The system provides noise control. The wind turbine (10) includes at least one blade (24) and a controller (40) configured for adjusting an operating parameter of the wind turbine system in response to receiving a noise control signal related to an external condition. The noise control signal indicates whether the external condition is at or above a predetermined level. The wind turbine system (10) is configured to operate in a noise control mode in response to the controller (40) receiving the noise control signal.

## Description

The present disclosure generally relates to a noise control system for a wind turbine system. In particular, the present disclosure relates to a system and method to control the noise generated by the wind turbine system in response to external conditions.

Recently, wind turbines have received increased attention as an environmentally safe and a relatively inexpensive alternative energy source. With this growing interest, considerable efforts have been made to develop wind turbines that are reliable and efficient.

Generally, a wind turbine can include a plurality of blades coupled to a generator rotor through a hub. The generator rotor can be mounted within a housing or nacelle, which may be positioned on top of a tubular tower or a base. The hub and blades may form a wind turbine rotor. Utility grade wind turbines (for example, wind turbines designed to provide electrical power to a utility grid) can have large wind turbine rotors (for example, thirty or more meters in diameter). Blades on these wind turbine rotors can transform wind energy into a rotational torque or force that drives the rotor of one or more generators, rotationally coupled to the rotor. The rotation of the blades can produce undesirable noises.

The system may be installed in an area, for example, a residential area, where a reduction in the total noise generated by the wind turbine may be needed. One method of reducing the noise generated by the wind turbine is to disable or derate the entire system, thereby preventing or reducing the generation of noise. However, disabling or derating the entire system also prevents the system from producing the desired amount of energy.

One technique to reduce noise in the system is through mechanical modifications to the system. For example, noise-insulating coatings may be applied to the system and any housings encasing such components to reduce noise generated. Alternatively, the system can be manufactured with noise-absorbing or noise-attenuating features. However, the use of noise-insulating coatings, noise-absorbing features, and/or noise-attenuating features are expensive and add significant complexity and expense to the system and do not permit reduction of noise in response to changing external conditions. Furthermore, the noise-insulating coatings, noise-absorbing features, and/or noise-attenuating features do not adequately shield from noise generated by the rotation of the blades.

What is needed is a wind turbine system and method to control the noise generated by the wind turbine system in response to external conditions.

In an exemplary embodiment of the present invention, a method of providing noise control for a wind turbine system includes providing a wind turbine system comprising at least one blade operably mounted on a wind turbine and a controller, determining an external condition with at least one sensor, receiving a noise control signal related to the external condition, and adjusting an operating parameter of the wind turbine system in response to receiving the noise control signal related to the external condition. In the embodiment, the operating parameter can be adjusted to alter the amount of noise generated by the wind turbine.

In another exemplary embodiment, a wind turbine system for providing noise control includes at least one blade operably mounted on a wind turbine, a controller configured for adjusting an operating parameter of the wind turbine system in response to receiving a noise control signal related to an external condition. In thee embodiment, the noise control signal indicates whether the external condition is at or above a predetermined level, and the wind turbine system is configured to operate in a noise control mode in response to the controller receiving the noise control signal.

In another exemplary embodiment, a wind turbine farm includes a plurality of wind turbines, at least one of the plurality of wind turbines including at least one blade operably mounted on the wind turbine, the wind turbine being configured to operate in a noise control mode in response to receiving a noise control signal from a controller. In the embodiment, the controller can be configured for adjusting an operating parameter of the at least one of the plurality of wind turbines in response to receiving the noise control signal related to an external condition, the noise control signal indicating whether the external condition is at or above a predetermined level.

One advantage of the present disclosure includes the ability to control the noise generated by the wind turbine system in response to external conditions.

Another advantage of the present disclosure includes increased control of noise and ability to meet regulatory requirements and/or local ordinances.

Another advantage of the present disclosure is that a turbine or turbines may be selectively operated in a more productive and noisier condition.

Various features and advantages of the present disclosure will be apparent from the following more detailed description of the preferred embodiment, taken in conjunction with the accompanying drawings which illustrate, by way of example, the principles of the disclosure, and in which:
FIG. 1 shows a side view of a wind turbine according to an embodiment of the disclosure.
FIG. 2 shows a partial cutaway of a portion of a wind turbine according to an embodiment of the disclosure.
FIG. 3 shows a schematic view of a controller according to an embodiment of the disclosure.
FIG. 4 shows a diagrammatic view of an exemplary embodiment of a noise control mode according to the disclosure.

Wherever possible, the same reference numbers will be used throughout the drawings to represent the same parts.

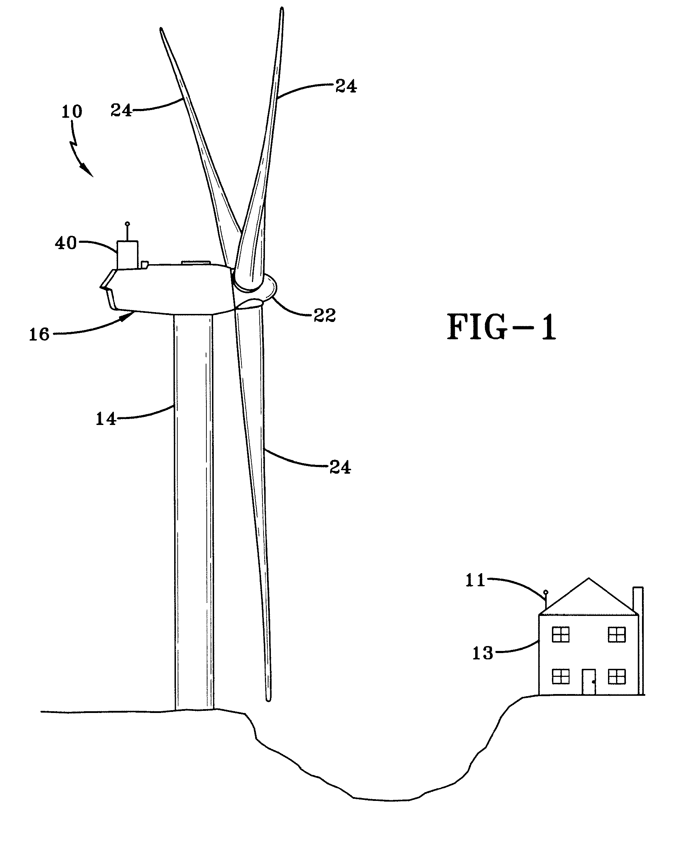

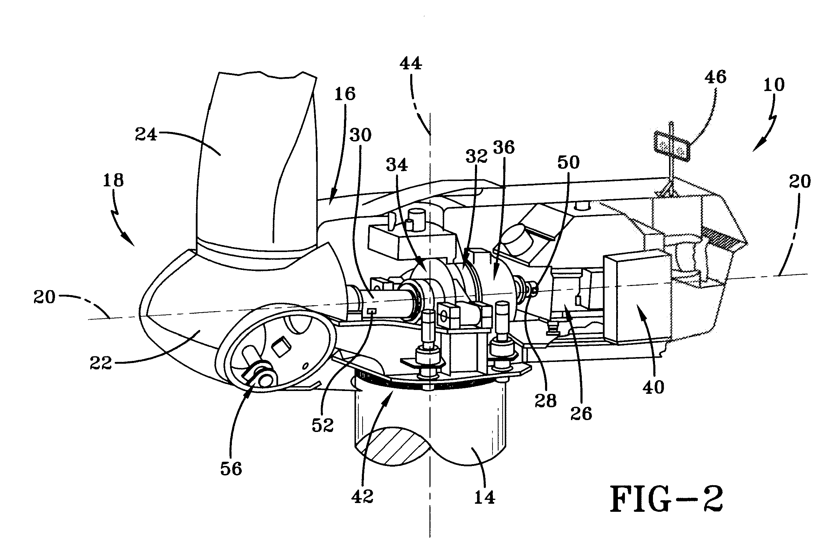

As shown in FIG. 1, a wind turbine system 10 generally comprises a nacelle 16 housing a generator 26 (see FIG. 2). Nacelle 16 can be a housing mounted atop a tower 14. Wind turbine system 10 can be installed on various types of terrain providing access to areas having desirable wind conditions. The terrain may vary greatly and may include, but is not limited to, mountainous terrain or off-shore locations. Wind turbine system 10 can also include one or more rotor blades 24 attached to a rotating hub 22. System 10 can include generator 26 for converting rotation of rotor blades 24 into electrical power.

FIG. 2 shows generator 26 including a rotor 18 in rotational communication with rotating hub 22, about which the one or more rotor blades 24 may rotate. Rotor 18 can be disposed within a stator (not shown) with an airgap (not shown) disposed therebetween. Rotor 18 and the stator can include a permanent magnet, electromagnetic windings, combinations thereof, or other suitable magnetic devices arranged to provide a magnetic flux across the airgap sufficient to generate electricity. For example, in one method of operation, a magnetic field generated by permanent magnets and/or electromagnets mounted on rotor 18 passes through the airgap between rotor 18 to the stator. The alternating magnetic fields induced by the alternating current (AC) provided to the electromagnet may result in induction, which generates power, which may be suitable for providing to an electrical grid or other load.

In some embodiments, wind turbine 10 may include a disc brake (not shown) for braking rotation of rotor 18 to, for example, slow rotation of rotor 18, brake rotor 18 against full wind torque, and/or reduce the generation of electrical power from generator 26. Furthermore, in some embodiments, wind turbine 10 may include a yaw system 42 for rotating nacelle 16 about an axis of rotation (not shown) for changing a yaw of rotor 18, and more specifically for changing a direction faced by rotor 18 to, for example, adjust an angle between the direction faced by rotor 18 and a direction of wind. Yaw system 42 may be coupled to a controller 40 for control. In some embodiments, wind turbine 10 may include anemometry 46 for measuring wind speed and/or wind direction. Anemometry 46, in some embodiments, may be coupled to controller 40 for sending measurements to controller 40 for processing thereof. For example, although anemometry 46 may be coupled to controller 40 for sending measurements thereto for controlling other operations of wind turbine 10, anemometry 46 may send measurements to controller 40 for controlling and/or changing a yaw of rotor 18 using yaw system 42. Alternatively, anemometry 46 may be coupled directly to yaw system 42 for controlling and/or changing a yaw of rotor 18. In other embodiments, controller 40 may control one wind turbine 10 or a plurality of wind turbines 10, controller 40 may operate in conjunction with other controllers, controller 40 may be a central controller controlling a plurality of wind turbines 10, and/or controller 40 may additionally operate other systems.

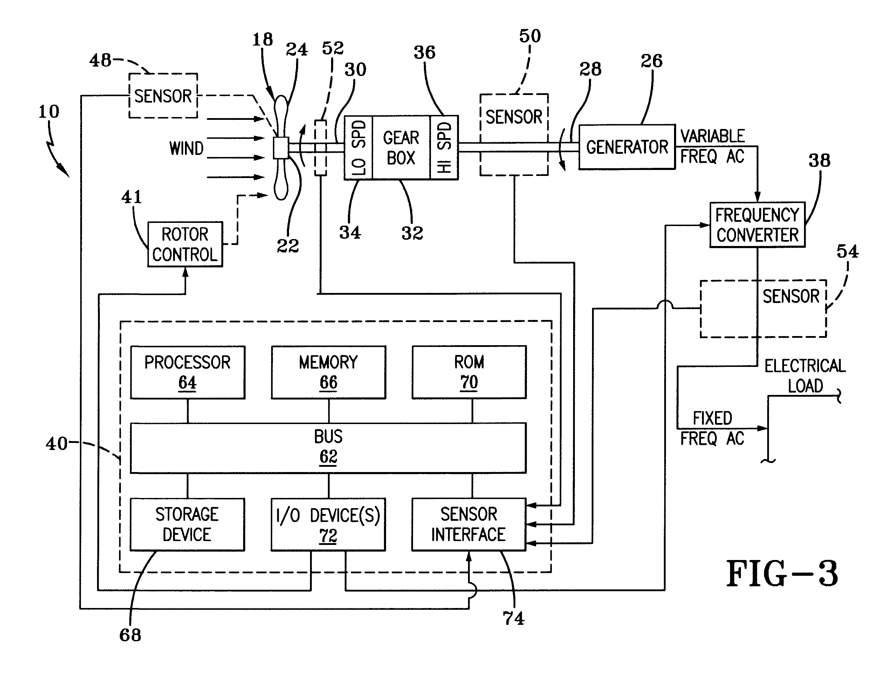

Referring to FIG. 3, controller 40 can be provided to monitor and control operation of wind turbine system 10 and/or generator 26. Controller 40 can include a microprocessor or controller configured to receive a noise control signal. In response to receiving the noise control signal, controller 40 can control the operation of wind turbine system 10 and/or generator 26. By controlling system 10 and/or generator 26, controller 40 can maintain or adjust the operating speed of rotor blades 24, operating conditions of generator 26, and/or other system operating parameters. In one embodiment with multiple wind turbine systems 10, controller 40 may selectively enable or disable each generator 26, and may selectively maintain and/or adjust the operating speed of rotor blades 24.

In some embodiments, controller 40 can include a bus 62 or other communications device to communicate information. One or more processor(s) 64 can be coupled to bus 62 to process information, including information from anemometry 46, sensors 48, 50, 52, and/or 54, and/or other sensor(s). Controller 40 may also include one or more random access memories (RAM(s)) 66 and/or other storage device(s) 68. RAM(s) 66 and storage device(s) 68 are coupled to bus 62 to store and transfer information and instructions to be executed by processor(s) 64. RAM(s) 66 (and/or also storage device(s) 68, if included) can also be used to store temporary variables or other intermediate information during execution of instructions by processor(s) 64. Controller 40 may also include one or more read only memories (ROM(s)) 70 and/or other static storage devices coupled to bus 62 to store and provide static (i.e., non-changing) information and instructions to processor(s) 64. Input/output device(s) 72 may include any device known in the art to provide input data to controller 40 and/or to provide outputs, such as, but not limited to, yaw control and/or pitch control outputs. Instructions may be provided to memory from a storage device, such as, but not limited to, a magnetic disk, a read-only memory (ROM) integrated circuit, CD-ROM, and/or DVD, via a remote connection that is either wired or wireless, providing access to one or more electronically-accessible media, etc. In some embodiments, hard-wired circuitry can be used in place of or in combination with software instructions. Thus, execution of sequences of instructions is not limited to any specific combination of hardware circuitry and software instructions, whether described and/or illustrated herein. Controller 40 may also include a sensor interface 74 that allows controller 40 to communicate with anemometry 46, sensors 48, 50, 52, and/or 54, and/or other sensor(s). Sensor interface 74 can be or can include, for example, one or more analog-to-digital converters that convert analog signals into digital signals that can be used by processor(s) 64.

Controller 40 can control wind turbine system 10 and/or generator 26 to operate at a higher, lower, or consistent speed upon controller 40 receiving the noise control signal initiating a noise control mode in response to external conditions. Controller 40 can execute a control algorithm(s) or include software to control operation of wind turbine system 10 and to determine and implement an operating configuration for wind turbine system 10 and/or generator 26. The control algorithm or software of controller 40 may determine, implement, analyze, measure, and/or control the speed of rotors 24 in order to maintain or adjust the noise generated by wind turbine system 10 in response to receiving the noise control signal. The control algorithm(s) may be computer programs or software stored in the non-volatile memory of controller 40 and may include a series of instructions executable by the microprocessor of controller 40. The control algorithm may be embodied in a computer program(s) and executed by the microprocessor, or the control algorithm may be implemented and executed using digital and/or analog hardware.

The control process to reduce or limit noise generated by wind turbine system 10 during the noise control mode may be automatically initiated from a preprogrammed instruction from a system control program and/or responsive to the detection of one or more predetermined external conditions. As used herein, the term "noise" includes a sound pressure level generated by the wind turbine and/or the external condition(s) including, but not limited to, wind speed, pressure, temperature, humidity, or the habitation of a nearby structure or structures (for example, a residence). The noise control signal may be received based upon preprogrammed conditions such as a desire to avoid generating noise at or above the predetermined level at certain times in a 24-hour period or other period. In an exemplary embodiment, the noise control mode may be initiated in response to a user input providing the control signal. The control signal may be generated in response to the user input indicating the user's detection of noise or the user's desire to avoid generating noise at or above a preselected level or to sense an external condition like the absence of people at a nearby residence and allow higher noise levels until people come home. Additionally or alternatively, the user input can identify the preselected level to be avoided by identifying a specific decibel limit or other suitable limit. The control process may be a stand-alone process or program, or the control process may be incorporated into a larger control process or program, such as a control program focused on efficiency of the system. In an exemplary embodiment with multiple wind turbine systems 10, the control process may generate the noise control signal for each wind turbine system 10 to avoid operation of at the predetermined speed for one or more of the wind turbine systems 10.

A control program or algorithm executed by a microprocessor or controller 40 may be used to determine the level (for example, a measured decibel reading or a measured pitch) of noise generated by wind turbine system 10 and/or the level of noise of generated by external conditions. The level of noise determined may include noise generated by specific components in wind turbine system 10, for example, by measuring noise generated by blades 24 rotating. The control program may receive a variety of inputs indicating external conditions, including but not limited to, wind speed, pressure, temperature, precipitation, background noise, local road traffic noise, humidity, or the habitation of nearby structure and/or residence. such as temperature, humidity, pressure, precipitation, background noise, local highway traffic noise, and/or non-occupancy of nearby structures (for example, residences). The inputs can be used in making the determination of when to adjust or maintain the speed of wind turbine system 10, generator 26, and/or adjust other operating parameters affecting the amount of noise generated, which may thereby affect the power production.

Referring again to FIG. 1, system 10 may include one or more sensors 11 for detecting and measuring operating parameters of system 10. The signals from the sensors 11 can be provided to controller 40 to control the operation of wind turbine system 10. Sensors 11 may include pressure sensors, temperature sensors, flow sensors, noise sensors, motion sensors, light sensors, vibration sensors or any other suitable type of sensor for evaluating the performance of wind turbine system 10 and the external conditions. Sensors 11 may be positioned on or near system 10 to detect and/or measure noise at or above a predetermined level. Sensors 11 may be in wired communication with controller 40 and/or in wireless communication with controller 40. To detect and/or measure noise, sensors 11 may be positioned in different locations to discount ambient noise in determining whether noise exceeds the predetermined amount. For example, sensor 11 may be positioned at a distance where sensor cannot detect noise from system 10 but can detect external conditions, such as the level of noise attributable to rain. As shown in FIG. 1, sensor 11 can be positioned on a structure such as a house 13 separate from the other portions of system 10. In an embodiment, for example in a wind turbine farm, sensor 11 may be configured for providing a noise control signal to a plurality of wind turbines. In another embodiment, the controller may control a plurality of wind turbines in response to receiving the noise control signal from one or more sensors 11.

The operation of wind turbine system 10 in the noise control mode to decrease noise may be controlled by controller 40. Controller 40 may receive input signals from a microprocessor, or alternatively from a user interface, indicating the presence of noise at or above the predetermined level and/or identifying the external conditions. Controller 40 processes the input signals and generates the appropriate control signals to the components of wind turbine system 10 to reduce the total noise generated by wind turbine system 10.

Operating the system 10 in the noise control mode may include maintaining or adjusting one or more operating parameters. Maintaining or adjusting operating parameters may include controlling torque of generator 26 (shown in FIG. 2) to thereby control torque of rotor shaft 30 (shown in FIG. 2), controlling an angle of pitch of one or more rotor blades 24 (shown in FIG. 1) to facilitate controlling the speed of rotor 24, controlling other operating parameters of generator 26, and/or controlling other suitable operating parameters of system 10.

Controlling generator 26 torque may include, but is not limited to, selecting generator torque, changing the generator torque, and/or controlling a rate at which the generator torque is changed. The value(s) of generator torque selected, changed, and/or controlled may be any suitable value(s) or range thereof, such as, but not limited to +/-20% of a predetermined rated torque. Generator torque may be controlled using any suitable structure, process, and/or means. In the exemplary embodiment, a frequency converter controls the torque of a coupling between generator rotor 18 and rotor shaft 30 to thereby control the torque of rotor shaft 30. In an exemplary embodiment, the frequency converter controls the torque of generator 26 by controlling an air gap (not shown) torque between rotor 18 and a stator (not shown) of generator 26.

Changing the pitch angle of blades 24 may include controlling a rate at which the pitch angle of one or more blades 24 is changed. The value(s) of blade pitch angle adjusted and/or maintained may be any suitable value(s) or range thereof, such as, but not limited to, between about -5 degree and about + 30 degree.

The noise control mode overrides the normal control algorithm of wind turbine system 10 when the control algorithm or program attempts to operate the wind turbine system 10 and/or generator 26 at a rotational speed that results in noise being generated at or above the predetermined level. In the noise control mode, wind turbine system 10 and/or generator 26 may operate to generate a desired amount of electricity, but the operation may be adjusted to reduce noise generation. If the control algorithm does not operate system 10 and/or generator 26 under parameters generating noise at or above the predetermined level, then the noise control algorithm does not override the control instruction from the control algorithm. However, if the control algorithm calls for operating the components at parameters generating noise above the predetermined level, then the control instruction for the component is overridden by the noise control mode.

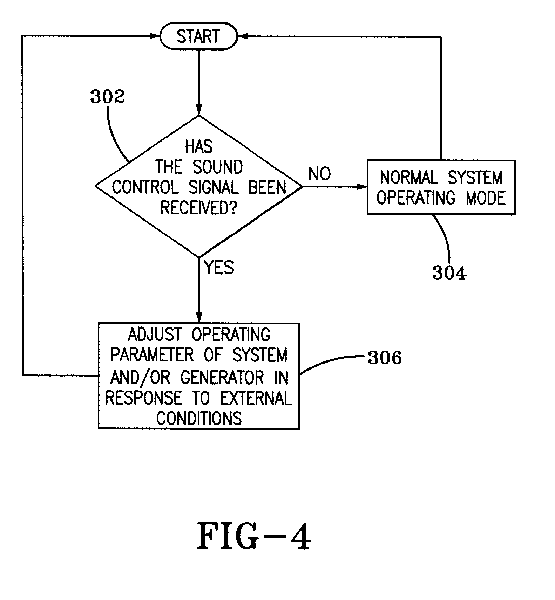

Fig. 4 shows a flow chart of an embodiment of the noise control mode or process. The process begins with a determination of whether the noise control signal indicating the detection of noise above a predetermined level has been received (step 302). If not, then normal operating mode continues (step 304) Under normal operation, other control programs and algorithms can control system 10. The process next returns to the start to determine if the noise control signal is present. If the noise control signal has been received, the controller 40 adjusts the speed of blades 24 and/or other operating conditions of wind turbine system 10 and/or generator 26 (step 306). In an exemplary embodiment, prohibited conditions can be assigned without detection of noise generated by system 10. In another exemplary embodiment, prohibited conditions can be assigned or determined based upon detection or measurement of noise generated by system 10 at locations near or far from system 10. In another exemplary embodiment, the controller 40 maintains the speed of blades and/or other operating conditions of wind turbine system 10 and/or generator 26. The process next returns to the start to determine if the control signal is present. If the control signal remains present, the noise control mode is repeated. If the control signal is not detected, the system resumes operation under other control programs.

When operating in noise control mode, the changes in operation may adjust the speed of blades 24. In an exemplary embodiment, generator 26 may be adjusted to increase torque to reduce the speed of blades 24. In another exemplary embodiment, generator 26 may be adjusted to decrease torque thereby increasing the speed of blades 24. Additional factors, for example, the time of day, whether electricity demand has been met, whether electricity demand has been decreasing, whether electricity demand is likely to increase, whether electricity demand is likely to decrease, and/or anticipated weather may be incorporated into the control process and/or noise control mode to determine whether to increase and/or decrease the speed of blades 24 and/or adjust operating parameters of wind turbine system 10 and/or generator 26. In this embodiment, one or more additional signals related to these factors may be provided to controller 40 and controller 40 may incorporate the factors into the noise control mode.

In one exemplary embodiment, a timer can be associated with the control process of noise control mode to restrict the number of adjustments that can be made to system 10 and/or generator 26 by the control process in a predetermined time period. For example, the timer may prevent the control process from issuing the noise control signal more often than the timer cycle, which cycle may vary from about 1 minute to about 60 minutes.

In another exemplary embodiment, a user of system 10 may view the control panel, such as by viewing a connected user interface to determine the particular system operating mode. For example, if an LED provided on the control panel is flashing or a user display has an alert message, then system 10 may be in noise control mode. However, if the LED on the control panel is not illuminated or there is no alert message on the user display, system 10 may be in a control operating mode to respond to demand for electricity.

While the disclosure has been described with reference to a preferred embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

Various aspects and embodiments of the present invention are defined by the following numbered clauses:
1. A method of providing noise control for a wind turbine system, comprising:
   providing a wind turbine system comprising at least one blade operably mounted on a wind turbine and a controller;
   determining an external condition with at least one sensor;
   receiving a noise control signal related to the external condition; and
   adjusting an operating parameter of the wind turbine system in response to receiving the noise control signal related to the external condition;
   wherein the operating parameter is adjusted to alter the amount of noise generated by the wind turbine.
2. The method of clause 1, wherein the operating parameter is selected from the group consisting of operating speed of the blades, torque demand, pitch angle, a map adjustment, a rotor speed, torque, or combinations thereof.
3. The method of any preceding clause, wherein the noise control mode includes adjusting the operating parameters of a generator in response to receiving the noise control signal, the generator being operably connected with the at least one blade.
4. The method of any preceding clause, wherein the external condition is selected from the group consisting of temperature, humidity, pressure, precipitation, background noise, local highway traffic noise, non-occupancy of nearby structures, and combinations thereof.
5. The method of any preceding clause, wherein the noise control signal is received from a user input.
6. The method of any preceding clause, wherein the sensor is remotely located, the remotely located sensor being configured for discounting ambient noise.
7. The method of any preceding clause, wherein the altering of the amount of the noise generated includes increasing or decreasing the noise generated to a predetermined amount.
8. The method of any preceding clause, further comprising automatically implementing the noise control.
9. The method of any preceding clause, wherein the adjusting of the operating parameter is further in response to signals relating to factors selected from the group consisting of time of day, whether electricity demand has been met, whether electricity demand has been decreasing, whether electricity demand is likely to increase, whether electricity demand is likely to decrease, anticipated weather, and combinations thereof.
10. A wind turbine system for providing noise control, comprising:
   at least one blade operably mounted on a wind turbine; a controller configured for adjusting an operating parameter of the wind turbine system in response to receiving a noise control signal related to an external condition, the noise control signal indicating whether the external condition is at or above a predetermined level; and,
   wherein the wind turbine system is configured to operate in a noise control mode in response to the controller receiving the noise control signal.
11. The system of clause 10, further comprising at least one sensor configured for determining the external condition.
12. The system of clause 10 or 11, wherein the operating parameter is selected from the group consisting of operating speed of the blades, torque demand, pitch angle, a map adjustment, a rotor speed, torque, or combinations thereof.
13. The system of any of clauses 10 to 12, wherein the controller is configured to adjust the operating parameters of a generator in response to receiving the noise control signal, the generator being operably connected with the at least one blade.
14. The system of any of clauses 10 to 13, wherein the external condition is selected from the group consisting of temperature, wind speed, humidity, pressure, precipitation, background noise, local highway traffic noise, non-occupancy of nearby structures, and combinations thereof.
15. The system of any of clauses 10 to 14, wherein the controller is configured for receiving a user input.
16. The system of any of clauses 10 to 15, wherein the controller is configured for automatically implementing the noise control.
17. The system of any of clauses 10 to 16, wherein the controller is configured for operating the wind turbine system in response to receiving one or more signals related to factors selected from the group consisting of time of day, whether electricity demand has been met, whether electricity demand has been decreasing, whether electricity demand is likely to increase, whether electricity demand is likely to decrease, anticipated weather, and combinations thereof.
18. A wind turbine farm, comprising:
   a plurality of wind turbines, at least one of the plurality of wind turbines comprising:
      at least one blade operably mounted on the wind turbine, the wind turbine being configured to operate in a noise control mode in response to receiving a noise control signal from a controller; and,
      the controller being configured for adjusting an operating parameter of the at least one of the plurality of wind turbines in response to receiving the noise control signal related to an external condition, the noise control signal indicating whether the external condition is at or above a predetermined level.
19. The farm of clause 18, further comprising at least one sensor configured for determining the external condition, the at least one sensor being configured for providing the noise control signal to the controller.
20. The farm of clause 18 or 19, wherein the at least one sensor is configured for providing the signal to the controller and a second controller of a second wind turbine of the plurality of wind turbines.

## Claims

1. A wind turbine system (10) for providing noise control, comprising:
at least one blade (24) operably mounted on a wind turbine (10);
a controller (40) configured for adjusting an operating parameter of the wind turbine system (10) in response to receiving a noise control signal related to an external condition, the noise control signal indicating whether the external condition is at or above a predetermined level; and,
wherein the wind turbine system (10) is configured to operate in a noise control mode in response to the controller (40) receiving the noise control signal.

2. The system (10) of claim 1, further comprising at least one sensor (11) configured for determining the external condition.

3. The system (10) of any preceding claim, wherein the operating parameter is selected from the group consisting of operating speed of the blades (24), torque demand, pitch angle, a map adjustment, a rotor speed, torque, or combinations thereof.

4. The system (10) of any preceding claim, wherein the controller (40) is configured to adjust the operating parameters of a generator (26) in response to receiving the noise control signal, the generator (26) being operably connected with the at least one blade (24).

5. The system (10) of any preceding claim, wherein the external condition is selected from the group consisting of temperature, wind speed, humidity, pressure, precipitation, background noise, local highway traffic noise, non-occupancy of nearby structures (13), and combinations thereof.

6. The system (10) of any preceding claim, wherein the controller (40) is configured for receiving a user input.

7. The system (10) of any preceding claim, wherein the controller (40) is configured for automatically implementing the noise control.

8. The system (10) of any preceding claim, wherein the controller (40) is configured for operating the wind turbine system (10) in response to receiving one or more signals related to factors selected from the group consisting of time of day, whether electricity demand has been met, whether electricity demand has been decreasing, whether electricity demand is likely to increase, whether electricity demand is likely to decrease, anticipated weather, and combinations thereof.

9. The system (10) of any preceding claim, further comprising a second wind turbine (10) operably connected to the controller (40).

10. The system (10) of claim 9, further comprising a second controller configured for adjusting an operating parameter of the second wind turbine (10) in response to receiving the noise control signal related to the external condition, the noise control signal indicating whether the external condition is at or above the predetermined level.
